# EUROPEAN PATENT SPECIFICATION

(11) **EP 2 482 153 B1**
(45) Date of publication and mention of the grant of the patent: **27.11.2013**
(21) Application number: 12152216.3
(22) Date of filing: 24.01.2012
(51) Int. Cl.: G05B 15/02

(54) **Method and computer program for configuring an automation system**
Verfahren und Computerprogramm zur Konfigurierung eines automatischen Systems
Procédé et logiciel pour la configuration d'un système automatique

(30) Priority: 01.02.2011 BE 201100064
(43) Date of publication of application: 01.08.2012
(73) Proprietor: Niko NV, 9100 Sint-Niklaas (BE)
(72) Inventor: Van Overloop, Isabelle, 9050 Gentbrugge (BE)
(74) Representative: D'Halleweyn, Nele Veerle Trees Gertrudis

(56) References cited:
- EP-A1- 2 098 926
- EP-A1- 2 098 928
- WO-A1-2004/107067

## Description

The present invention relates to a method for configuring an electrical system. The invention also relates to a computer program for configuring an automation or home automation system.

In known electrical systems, particularly in automation or home automation systems for installation in a building or the like, one or more central or decentralized control units are directly or indirectly connected to multiple inputs and multiple outputs. The one or more central or decentralized control units are configured, upon receipt of specific instructions from the inputs, to initiate certain actions of devices via the outputs. The inputs are connected to input devices such as switches, rotary knobs (dimmer means), sensors, etc., which are provided in several places in the area to be controlled, typically a home or other type of building. The outputs are connected to output devices such as lighting equipment, technical equipment such as HVAC systems and various actuators such as automated blinds and curtains. Hence, the configuration of the one or more central or decentralized control units determines, inter alia, with which button or buttons each device can be operated, and under what conditions.

Programming and configuration of control systems are known in the field of industrial environments from EP 2 098 926 A1.

The inputs and outputs are housed in application-specific modules, hereafter called I/O modules, which are arranged to communicate with the one or more central or decentralized control units.

Preferably, the one or more central or decentralized control units and I/O modules have standardized dimensions, in particular, preferably dimensions allowing mounting in a control box with DIN-rails. Inputs are usually directly connected via the communication channel of the electrical and automation system with one or more central or decentralized control units, i.e. the necessary logic to communicate via the bus of the control box with one or more central or decentralized control units is integrated into the input device. Hence, the term I/O module concerns both I/O modules of the type mounted in a control box, as well as modules integrated in an input device.

It is a general disadvantage of the known electrical systems of the type described that the configuration is rather cumbersome. This is partly due to the fact that during configuration an address for each input and output must be detected and stored.

It is an object of the present invention to provide a method and a program for configuring an electrical system which may be configured in a less cumbersome manner.

This goal is achieved by the features of the independent claims 1 and 9, respectively.

The invention has the advantage that the choice of the building blocks of the electrical system, in particular the home automation system, is reduced to its essence, in particular the selection of input and output devices, after which a deterministic definition of corresponding I/O modules may take place independently and automatically. Among virtually generating I/O modules is included automatically generating a list of the corresponding I/O modules, which list is provided to the user in a textual or graphical form, preferably on a display screen.

In a specific embodiment, receiving the selection of the desired I/O devices is accomplished by means of a graphical user interface.

In an embodiment, receiving the selection of the desired I/O devices comprises receiving a user selected functional combination.

It is an advantage of this embodiment that the user does not have to worry about individual input and output devices, but rather may select which functions should be fulfilled by the devices. The configuration terminal provides the translation of the selected functions into the necessary I/O devices.

In an embodiment, the method of the present invention comprises also selecting the desired interactions between inputs and outputs of the multiple I/O modules.

In an embodiment, the method of the present invention further comprises virtually assigning the desired I/O devices (111-114) to the generated I/O modules (101-104).

In an embodiment of the method of the present invention, each of the multiple I/O modules is provided with a logical address, and the method further comprises the sequential activation of each of the multiple I/O modules, wherein each time the logical address of the activated I/O module is received and stored in a configuration file.

It is an advantage of this embodiment that the configuration can be constructed using I/O modules instead of individual outputs, because the types of the I/O modules are known in advance. Subsequently, it is sufficient to detect an address for each of the I/O modules during a one-time activation, to adequately address all outputs. The same applies mutatis mutandis to inputs, provided that they are connected via a separate I/O module.

In an embodiment of the method of the present invention, the one or more central or decentralized control units is connected with a configuration terminal, wherein the logical address of the activated I/O module is received by the configuration terminal and is stored in a configuration file, and the method further comprises: transferring the configuration file from the configuration terminal to the one or more central or decentralized control units.

This embodiment has the advantage that the configuration can be prepared on the configuration terminal, which offers typically a more powerful and flexible platform than the one or more central or decentralized control units. The configuration terminal may be a generic portable computer. After preparing the configuration, it is transferred in the form of a data file to the one or more central or decentralized control units.

In an embodiment of the method of the present invention the one or more central or decentralized control units is connected with the configuration terminal over an IEEE 802.3 point-to-point connection.

The choice of an IEEE 802.3 point-to-point connection, also known as "Ethernet", has the advantage that it ensures a sufficiently high transfer rate (typically between 10 Mb/s and 1000 Mb/s), and that a connection of this type is commonly provided in portable computers.

In an embodiment of the method of the present invention, the one or more central or decentralized control units is connected to the configuration terminal over an IP network.

This embodiment has the advantage that the one or more central or decentralized control units may be connected with the configuration terminal regardless of the available communication technologies on the level of the physical layer and data link layer of the respective outputs. In particular, in this embodiment, it is possible to have communicated the one or more central or decentralized control units and the configuration terminal with one another via a data network, available in the building, or over a longer distance over the Internet (remote control).

The object of the present invention is also achieved by a computer program for configuring an electrical system, according to claim 9.

In a specific embodiment, receiving the selection of desired I/O devices is achieved via a graphical user interface.

In an embodiment, receiving the selection of the desired I/O devices comprises receiving a user-selected functional combination.

In an embodiment, the computer program of the present invention is further arranged to have the following steps be executed by the configuration terminal: receiving a selection of desired interactions between inputs and outputs of the I/O modules corresponding to the desired I/O devices; and generating a configuration file for the home automation system, which configuration file comprises the desired interactions.

In a specific embodiment, receiving the selection of desired interactions is achieved via a graphical user interface.

In an embodiment, the computer program of the present invention is further arranged to have carried out the following step by the configuration terminal: virtually assigning the desired I/O devices to the generated I/O modules.

In an embodiment, the computer program of the present invention is further arranged to have carried out the following step by the configuration terminal: requesting a sequential activation of each of the I/O modules, and detecting and storing a logical address of each of the sequentially activated I/O modules.

In an embodiment, the computer program of the present invention is further arranged to have carried out the following step by the configuration terminal: transferring the configuration file to the one or more central or decentralized control units.

The advantages of the various embodiments of the computer program of the present invention are substantially similar to the aforementioned advantages of the corresponding embodiments of the method of the invention.

These and other aspects and advantages of the invention will now be further described by reference to the accompanying drawings, wherein:
Figure 1 schematically represents an automation or home automation system wherein the present invention may be applied;
Figure 2 schematically represents the control unit of the home automation system shown in Figure 1, and
Figure 3 is a flow diagram of a method according to an embodiment of the present invention.

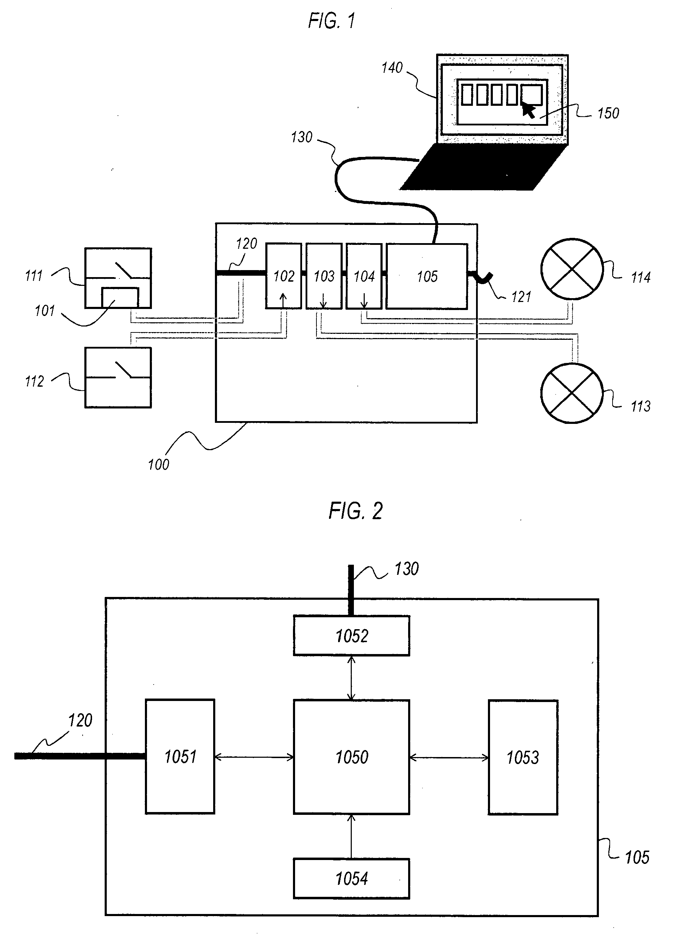

Figure 1 illustrates an exemplary automation or home automation system. The system is controlled from the central control box **100,** comprising a control unit **105.** Without loss of generality, only two input devices are shown in the figure, in particular switch **111** and switch **112.** It is also possible to provide multiple control units, whether or not installed centrally or decentrally. Switch **111** is provided with an integrated communication module **101,** which is directly connected to the communication bus **120** of the control box **100.** Switch **112** is connected to the input module **102** in the control box **100.** Again without loss of generality, in the figure only two output devices are shown, in particular a lamp **113** and lamp **114.** These are respectively connected to the output modules **103** and **104** in the control box **100.**

The communication between the respective modules **101-104** and the control unit **105** is achieved via a communication channel provided in the control box **100.** In Figure 1, this communication channel is shown by way of example as the bus **120.** Obviously, other network topologies are also useful, such as a star topology for which the control unit **105** is the central node. Preferably, the selected communication channel has a means **121** which allows the control box **100** to be connected to another control box (not shown), to build systems with a larger number of modules.

The assignment of one or more switches **111, 112** to one or more lamps **113, 114,** is not done physically, as was common before the advent of home automation, but by a suitable configuration of the control unit **105.** Hence, of course configurations are possible wherein each switch (**111** or **112**) controls a single lamp (**113** or **114**)**,** but also configurations are possible involving both lamps (**113** and **114**) to light up simultaneously or not to light up, and each of both switches (**111** and **112**) may be used to switch said pair of lamps on or off. Depending on the capabilities of the control unit **105,** additional conditions may be imposed on the functional coupling between input devices and output devices, or certain actions may occur with a certain time delay.

Figure 1 also shows a connection **130** between the control unit **105** in the control box **100** and an external terminal, here shown by way of example as a portable computer **140.** On the display screen of terminal **140** is depicted, merely as an illustration, a graphical user interface (GUI) **150,** depicting by way of example a schematic representation of the control box **100.** Preferably, the connection **130** is a fast data connection, such as an IEEE 802.3 "Ethernet" connection of the type 10BASE-T, 100BASE-T or 1000BASE-T, which is commonly provided on portable computers. The skilled person will understand that, depending on the complexity of the application and the desired speed, other types of connections may be used in embodiments of the present invention, of which we only mention, by way of example, USB, Firewire and RS-232.

Although the connection **130** was illustrated as a single point-to-point cable, a more complex network may be present between the control unit **105** and the terminal **140.** In particular, it is possible that the end user or installer is given access to the control unit **105** of the home automation system from any computer in the IP-based home network. The connection **130** between the control unit **105** and the configuration terminal **140** might then be achieved via an IP module provided in a control box **100** (not shown).

Figure 2 comprises a schematic representation of the control unit **105** of Figure 1. A central processing unit **1050** is responsible for processing the input received from the input devices, and for generating the necessary output to control the output devices. For this purpose, the central processing unit **1050** communicates with the modules present in the control box **100** via the communication channel **120.** The channel-specific communication functions are typically performed by a first specialized communication component **1051.**

Similarly, typically a second specialized communication component **1052** is responsible for the communication over the connection **130** with the configuration terminal **140.**

The configuration of the control unit **105** is stored in a memory **1053,** such that the control unit after the configuration phase may be disconnected from the terminal **140,** and may continue to function according to the received and stored configuration.

To have the central processing unit **1051** function properly, it is necessary to surround the latter by the usual components, including a clock **1054.** The clock **1054** also allows to perform certain functions in the home automation system on time-dependent manner.

The central processing unit **1050** may, for example, consist of a commercially available processor or controller with appropriate software, programmable logic, such as FPGA, or a hardware block designed for the application, such as an ASIC.

The skilled person will understand that Figure 2 and the above description are schematic in nature, and that the precise distribution of the functions of electronic components may differ without prejudice to the described architecture.

Typical building blocks that do not pose problems to the skilled person, such as power supplies, were not explicitly mentioned in the aforementioned for reasons of simplicity. However, it will be obvious that such building blocks are necessary to achieve a working whole.

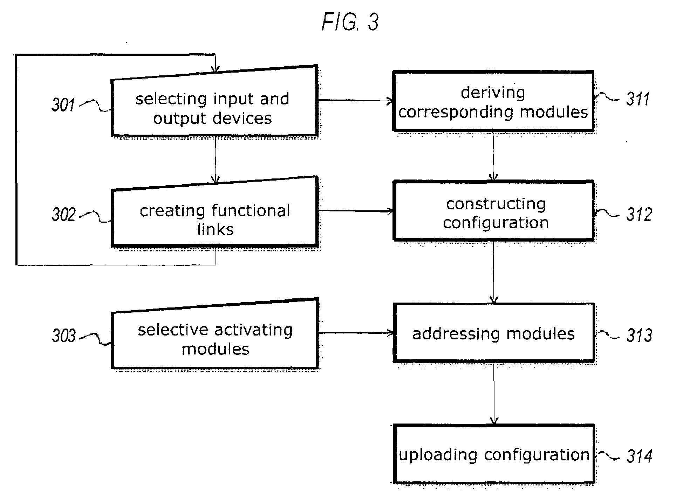

Figure 3 shows a flowchart of a method according to an embodiment of the present invention.

To understand the method of the invention, it is useful to consider how the construction of the control box took place according to the prior art. A specialized installer selects the modules needed to operate the devices provided (or desired by the client) in the building. These modules, together with a control unit, are housed in the control box. The control unit and all I/O modules should then be configured, which is typically done via a terminal connected to the control unit. The configuration phase comprises on the one hand listing all relevant addresses of the input and output devices provided in the system, hereafter referred to as "addressing", and on the other hand establishing the functional relations between said input and output devices. When addressing according to the method of the prior art, each input and each output should be activated individually, such that the terminal, via the control unit, could read and store the address of the activated device.

The present invention is based on the insight that the selection of the necessary modules can be performed by an automated expert system, once the desired input and output devices are known. Thus, the virtual control box can automatically be filled by the configuration software, after which the actual control box can simply be set up accordingly.

For a proper understanding and without loss of generality, it is useful to consider the method of the invention as a sequence of steps performed by the configuration terminal **140,** whether or not as a function of input by a user or installer (not shown). Steps implying input by a user or installer are shown in the left column of Figure 3. Steps rather autonomously taken by the configuration terminal **140** are shown in the right column of Figure 3.

In a first input step **301,** the configuration terminal **140** receives the selection of the input and output devices present or desired in the building. This selection is done either manually by a user or installer, but may in principle also be read in from a previously stored file, for example, from a control unit in an existing installation. It is also possible that an automatic detection by the system can be done, wherein existing input and output devices are detected and transmitted to the configuration terminal. This is especially useful in the case of an extension of an existing system. It is also possible for the user to select for certain areas no or not only individual input and output devices, but selects a ready-made action from a library to obtain a certain effect, wherein the configuration terminal **140** automatically incorporates the corresponding devices in the selection list. Hence, the user may concentrate on the desired effect and select the appropriate functional combination, without worrying about the devices required for this effect to happen, which are automatically selected by the terminal. Further details about offering such library operations can be found in the patent application entitled "Method and apparatus for improving electrical systems", filed by the Applicant of the present application on 28 January 2011.

Based on the selection received, the configuration terminal **140** autonomously derives in step **311** the list of necessary I/O modules in the control box **100.** Hence, the control box **100** is virtually filled by the configuration terminal **140.** To enable this, it is sufficient that the configuration terminal **140** comprises a database connecting the available input and output devices to the appropriate I/O modules for these devices. Obviously, there is no need to provide any additional modules in the control box **100** for input devices with integrated module. Preferably, the configuration terminal **140** allows the user to manually change the automatic module selection, for example, to provide additional capacity in view of future changes.

If, at the time of configuring, there is no existing physical configuration, the configuration terminal **140** may also proceed in the virtual configuration to automatically associate the specific input and/or output devices with the corresponding I/O modules. Obviously, it is desirable that the configuration terminal **140** allows that existing physical connections are entered by the user, and are respected by the configuration terminal **140.**

The configuration terminal **140** may optionally be arranged to optimize the list of input and input/output devices. In an advantageous embodiment, the configuration terminal **140** is adapted to present an optimized list using the imported list and a set of optimization rules. Next, the user is preferably given the opportunity whether or not to accept the optimized list, or optionally amend it. Optimization can relate to the total cost of the installation, the ease of installation, the estimated consumption of the installation, and such criteria. Purely by way of example, the following possible optimization rules are mentioned: replacing multiple single controls by a single multiple control, providing a dimmable or stepwise operation rather than an on/off control, providing a multiple operation with more control units than those chosen by the user (in view of subsequent expansion of the installation), and adding motion detectors to reduce the energy consumption by turning off some devices automatically when absent.

In a second input step **302,** the configuration terminal **140** receives the selection of the desired functional relationships between the input and output devices selected in the first step **301.** These relationships are translated in a next step **312** by the configuration terminal **140** into functional links between specific inputs and outputs of individual I/O modules.

Preferably, the configuration terminal **140** provides a graphical user interface for performing the first input step **301** and the second input step **302.** It could concern a common interface, wherein a strict separation between the two sequential steps **301, 302** is not necessary. A user-friendly embodiment shows an incremental build-up of the system, wherein the steps **301, 302** are repeated for each time new input and output devices.

In the invention, the graphical user interface comprises an interface wherein the user or the installer can draw a schematic floor plan of the building to be serviced, and wherein the desired input and output devices can be drawn by means of schematic representations on their approximate correct location on the floor map. Under drawing is also understood dragging predefined schematic representations of input and output devices to the desired location on the floor plan.

In a preferred embodiment, a graphical user interface is provided for the schematic representation of the control box to construct, wherein the control unit and the various I/O modules can be drawn in their proper place in the control box. By this schematic and graphical representation, it is very simple for the user to actually build the installation in reality, after the virtual installation. This allows errors to be avoided, or at least reduced to a minimum.

In the third input step **303,** the configuration terminal **140** learns the addresses of the input and output devices. For this purpose, one the hand it is required that the I/O modules are selectively activated on request by the user or installer, and on the other hand that the configuration terminal **140** receives and stores **313** the addresses, which are transmitted upon activation, to incorporate them into the configuration. Also the input devices which are connected directly to the control box, i.e. the input devices with integrated module, should be selectively activated to allow detection by the control unit **105.** Since the configuration terminal **140** in this phase due to step **311** is already accurately informed of the I/O modules present, and due to step **312** is already accurately informed of the allocation of the individual inputs and outputs of said I/O modules, now, a single activation per I/O modules is sufficient to compose a correct address list for all inputs and outputs.

Subsequently, the configuration may then be transmitted via connection **130,** provided with the correct addresses, from the configuration terminal **140** to the control unit **105** in step **314.**

In Figure 3 and in the aforementioned description, an embodiment of the method of the present invention is described using successive steps. It will be obvious that the sequence of steps in other embodiments of the invention does not need to correspond to the described sequence, except to the extent as explicitly stated that a particular step can only be performed after the implementation of another specific step.

A further embodiment of the invention concerns a computer program arranged to have a computer execute the aforementioned method.

As the description above *mutatis mutandis* also applies to the computer program, it is not explicitly repeated. Further details on the possible structure of the computer program can be found in the application entitled "Method for use in installing a home automation system, computer media and computer", submitted by the Applicant of the present application on 28 January 2011.

The computer program according to the present invention can be provided in the form of a computer program product, especially as a computer readable storage medium on which the computer program is stored. The storage medium comprises a magnetic tape, a magnetic disk, an optical disk or a semiconductor memory.

Although the invention has been described above by reference to certain specific embodiments, they only serve as examples and in no way they limit the scope of the invention.

## Claims

1. Method for configuring a home automation system for installation in a building, using a configuration terminal (140), which system is provided with one or more central or decentralized control units (105) and multiple I/O modules (101 - 104) of previously known types, wherein each of the multiple I/O modules (101 - 104) comprise at least one input and/or at least one output, the method comprising:
- receiving a selection (301) of desired I/O devices (111-114) from a predetermined set of available I/O devices; and
- virtually generating (311) I/O modules (101 - 104) corresponding with the desired I/O devices (111-114), wherein selecting (302) the desired interactions is accomplished by means of a graphical user interface (150) comprising an interface wherein a schematic floor plan of the building can be drawn, and wherein the desired I/O devices can be drawn by means of schematic representations on their approximate correct location on the floor plan.

2. Method according to claim 1, wherein receiving (301) the selection of the desired I/O devices (111-114) comprises receiving a user selected functional combination.

3. Method according to any one of the preceding claims, further comprising: selecting (302) of desired interactions between inputs and outputs of the multiple I/O modules (101-104).

4. Method according to any one of the preceding claims, further comprising virtually assigning the desired I/O devices (111-114) to the generated I/O modules (101-104).

5. Method according to any one of the preceding claims, wherein each of the multiple I/O modules (101-104) is provided with a logical address, and the method further comprises: the sequential activation (303) of each of the multiple I/O modules (101-104), wherein each time the logical address of the activated I/O module is received and stored (313) in a configuration file.

6. Method according to claim 5, wherein the one or more central or decentralized control units (105) is connected with a configuration terminal (140), wherein the logical address of the activated I/O module is received by the configuration terminal (140) and is stored (313) in a configuration file, and the method further comprises: transferring (314) the configuration file from the configuration terminal (140) to the one or more central or decentralized control units (105).

7. Method according to claim 6, wherein the one or more central or decentralized control units (105) is connected to the configuration terminal (140) over an IEEE 802.3 point-to-point connection (130).

8. Method according to claim 6 or 7, wherein the one or more central or decentralized control units (105) is connected to the configuration terminal (140) over an IP network (130).

9. Computer program for configuring a home automation system for installation in a building, which home automation system is equipped with one or more central or decentralized control units (105) and multiple I/O modules (101-104) of previously known types, which computer program is provided with software means arranged to have the following steps carried out by the configuration terminal (140) connected with the one or more central or decentralized control units (101-104):
- receiving a selection (301) of desired I/O devices (111-114) from a predetermined set of available I/O devices; and
- virtually generating (311) the I/O modules (101-104) corresponding to the desired I/O devices (111-114) wherein the receiving a selection of the desired I/O devices is accomplished by means of a graphical user interface (150) comprising an interface wherein a schematic floor plan of the building can be drawn, and wherein the desired I/O devices can be drawn by means of schematic representations on their approximate correct location on the floor plan.

10. Computer program according to claim 9, wherein receiving the selection of desired I/O devices is achieved via a graphic user interface (150) and comprises receiving a user-selected functional combination.

11. Computer program according to claim 9-10, provided with software means arranged to have the following steps be executed by the configuration terminal (140):
- receiving a selection (30) of desired interactions between inputs and outputs of the I/O modules (101-104) corresponding to the desired I/O devices (111-114);
- generating (312) a configuration file for the home automation system, which configuration file comprises the desired interactions.

12. Computer program according to any one of the claims 9-11, provided with software means arranged to have carried out the following step by the configuration terminal (140):
- virtually assigning the desired I/O devices (111-114) to the generated I/O modules (101-104).

13. Computer program according to any one of the claims 9-12, provided with software means arranged to have carried out the following step by the configuration terminal (140):
- requesting a sequential activation (303) of each of the I/O modules (101-104); and
- detecting and storing (313) a logical address of each of the sequentially activated I/O modules (101-104).

14. Computer program according to any one of the claims 9-13, provided with software means arranged to have carried out the following step by the configuration terminal (140):
- transferring (314) the configuration file to the one or more central or decentralized control units (105).

## Patentansprüche

1. Verfahren zum Konfigurieren eines Wohngebäudeautomationssystems zur Installation in einem Gebäude mithilfe eines Konfigurationsterminals (140), wobei das System mit einer oder mehreren zentralen oder dezentralisierten Steuereinheiten (105) und mehreren E/A-Modulen (101-104) bereits bekannter Arten versehen ist, wobei jedes der mehreren E/A-Module (101-104) mindestens einen Eingang und/oder mindestens einen Ausgang umfasst, wobei das Verfahren Folgendes umfasst:
- Aufnehmen einer Auswahl (301) gewünschter E/A-Geräte (111-114) aus einem vorgegebenen Satz verfügbarer E/A-Geräte und
- virtuelles Erzeugen (311) von E/A-Modulen (101-104), die den gewünschten E/A-Geräten (111-114) entsprechen, wobei das Auswählen (302) der gewünschten Interaktionen mittels einer grafischen Benutzerschnittstelle (150) erfolgt, die eine Schnittstelle umfasst, wobei ein schematischer Grundriss des Gebäudes gezeichnet werden kann und wobei die gewünschten E/A-Geräte mithilfe schematischer Darstellungen an ihrer ungefähren korrekten Position im Grundriss gezeichnet werden können.

2. Verfahren nach Anspruch 1, wobei das Aufnehmen (301) der Auswahl der gewünschten E/A-Geräte (111-114) das Aufnehmen einer vom Benutzer ausgewählten funktionellen Kombination umfasst.

3. Verfahren nach einem der vorstehenden Ansprüche, ferner umfassend:
Auswählen (302) gewünschter Interaktionen zwischen Eingängen und Ausgängen der mehreren E/A-Module (101-104).

4. Verfahren nach einem der vorstehenden Ansprüche, ferner umfassend das virtuelle Zuweisen der gewünschten E/A-Geräte (111-114) zu den erzeugten E/A-Modulen (101-104).

5. Verfahren nach einem der vorstehenden Ansprüche, wobei jedes der mehreren E/A-Module (101-104) mit einer logischen Adresse versehen ist und das Verfahren ferner Folgendes umfasst: die sequenzielle Aktivierung (303) jedes der mehreren E/A-Module (101-104), wobei jedes Mal die logische Adresse des aktivierten E/A-Moduls empfangen und in einer Konfigurationsdatei gespeichert (313) wird.

6. Verfahren nach Anspruch 5, wobei die eine oder die mehreren zentralen oder dezentralisierten Steuereinheiten (105) mit einem Konfigurationsterminal (140) verbunden sind, wobei die logische Adresse des aktivierten E/A-Moduls vom Konfigurationsterminal (140) empfangen und in einer Konfigurationsdatei gespeichert (313) wird und das Verfahren ferner Folgendes umfasst: Übertragen (314) der Konfigurationsdatei vom Konfigurationsterminal (140) an die eine oder die mehreren zentralen oder dezentralisierten Steuereinheiten (105).

7. Verfahren nach Anspruch 6, wobei die eine oder die mehreren zentralen oder dezentralisierten Steuereinheiten (105) mit dem Konfigurationsterminal (140) über eine IEEE 802.3-Punkt-zu-Punkt-Verbindung (130) verbunden sind.

8. Verfahren nach Anspruch 6 oder 7, wobei die eine oder die mehreren zentralen oder dezentralisierten Steuereinheiten (105) mit dem Konfigurationsterminal (140) über ein IP-Netzwerk (130) verbunden sind.

9. Computerprogramm zum Konfigurieren eines Wohngebäudeautomationssystems zur Installation in einem Gebäude, wobei das Wohngebäudeautomationssystem mit einer oder mehreren zentralen oder dezentralisierten Steuereinheiten (105) und mehreren E/A-Modulen (101-104) bereits bekannter Arten ausgestattet ist, wobei das Computerprogramm mit Software-Mitteln versehen ist, die so installiert sind, dass die folgenden Schritte von dem Konfigurationsterminal (140) ausgeführt werden, das mit der einen oder den mehreren zentralen oder dezentralisierten Steuereinheiten (101-104) verbunden ist:
- Aufnehmen einer Auswahl (301) gewünschter E/A-Geräte (111-114) aus einem vorgegebenen Satz verfügbarer E/A-Geräte; und
- virtuelles Erzeugen (311) der E/A-Module (101-104), die den gewünschten E/A-Geräten (111-114) entsprechen, wobei das Aufnehmen einer Auswahl der gewünschten E/A-Geräte mithilfe einer grafischen Benutzerschnittstelle (150) erfolgt, die eine Schnittstelle umfasst, wobei ein schematischer Grundriss des Gebäudes gezeichnet werden kann und wobei die gewünschten E/A-Geräte mithilfe schematischer Darstellungen an ihrer ungefähren korrekten Position im Grundriss gezeichnet werden können.

10. Computerprogramm nach Anspruch 9, wobei das Aufnehmen der Auswahl gewünschter E/A-Geräte über eine grafische Benutzerschnittstelle (150) erfolgt und das Aufnehmen einer vom Benutzer ausgewählten funktionellen Kombination umfasst.

11. Computerprogramm nach Anspruch 9-10, das mit Software-Mitteln versehen ist, die so installiert sind, dass die folgenden Schritte vom Konfigurationsterminal (140) ausgeführt werden:
- Aufnehmen einer Auswahl (30) gewünschter Interaktionen zwischen Eingängen und Ausgängen der E/A-Module (101-104), die den gewünschten E/A-Geräten (111-114) entsprechen;
- Erzeugen (312) einer Konfigurationsdatei für das Wohngebäudeautomationssystem, wobei die Konfigurationsdatei die gewünschten Interaktionen umfasst.

12. Computerprogramm nach einem der Ansprüche 9-11, das mit Software-Mitteln versehen ist, die so installiert sind, dass der folgende Schritt von der Konfigurationsterminal (140) ausgeführt wird:
- virtuelles Zuweisen der gewünschten E/A-Geräte (111-114) zu den erzeugten E/A-Modulen (101-104).

13. Computerprogramm nach einem der Ansprüche 9-12, das mit Software-Mitteln versehen ist, die so installiert sind, dass der folgende Schritt vom Konfigurationsterminal (140) ausgeführt wird:
- Anfordern einer sequenziellen Aktivierung (303) jedes der E/A-Module (101-104) und
- Erkennen und Speichern (313) einer logischen Adresse jedes der sequenziell aktivierten E/A-Module (101-104).

14. Computerprogramm nach einem der Ansprüche 9-13, das mit Software-Mitteln versehen ist, die so installiert sind, dass der folgende Schritt vom Konfigurationsterminal (140) ausgeführt wird:
- Übertragen (314) der Konfigurationsdatei an die eine oder die mehreren zentralen oder dezentralisierten Steuereinheiten (105).

## Revendications

1. Procédé de configuration d'un système de domotique pour installation dans un bâtiment, utilisant un terminal de configuration (140), ledit système étant doté d'une ou de plusieurs unités de commande centrales ou décentralisées (105) et de multiples modules E/S (101 - 104) de types précédemment connus, dans lequel chacun des multiples modules E/S (101 - 104) comprend au moins une entrée et/ou au moins une sortie, le procédé comprenant :
- la réception d'une sélection (301) de dispositifs E/S souhaités (111-114) depuis un ensemble prédéterminé de dispositifs E/S disponibles ; et
- la génération virtuelle (311) de modules E/S (101 - 104) correspondant aux dispositifs E/S souhaités (111-114), dans lequel la sélection (302) des interactions souhaitées est accomplie au moyen d'une interface utilisateur graphique (150) comprenant une interface, dans laquelle un plan de sol schématique du bâtiment peut être dessiné et dans laquelle les dispositifs E/S souhaités peuvent être dessinés par le biais de représentations schématiques de leur emplacement approximativement exact sur le plan de sol.

2. Procédé selon la revendication 1, dans lequel la réception (301) de la sélection des dispositifs E/S souhaités (111-114) comprend la réception d'une combinaison fonctionnelle sélectionnée par l'utilisateur.

3. Procédé selon l'une quelconque des revendications précédentes, comprenant en outre : la sélection (302) d'interactions souhaitées entre les entrées et les sorties des multiples modules E/S (101-104).

4. Procédé selon l'une quelconque des revendications précédentes, comprenant en outre l'attribution virtuelle des dispositifs E/S souhaités (111-114) aux modules E/S générés (101-104).

5. Procédé selon l'une quelconque des revendications précédentes, dans lequel chacun des multiples modules E/S (101-104) est doté d'une adresse logique et le procédé comprend en outre : l'activation séquentielle (303) de chacun des multiples modules E/S (101-104), dans lequel à chaque fois l'adresse logique d'un module E/S activé est reçue et stockée (313) dans un fichier de configuration.

6. Procédé selon la revendication 5, dans lequel la ou les plusieurs unités de commande centrales ou décentralisées (105) sont connectées à un terminal de configuration (140), dans lequel l'adresse logique du module E/S activé est reçue par le terminal de configuration (140) et est stockée (313) dans un fichier de configuration et le procédé comprend en outre : le transfert (314) du fichier de configuration depuis le terminal de configuration (140) vers la ou les unités de commande centrales ou décentralisées (105).

7. Procédé selon la revendication 6, dans lequel la ou les unités de commande centrales ou décentralisées (105) sont connectées au terminal de configuration (140) par le biais d'une connexion point à point basée sur IEEE 802.3 (130).

8. Procédé selon la revendication 6 ou 7, dans lequel la ou les unités de commande centrales ou décentralisées (105) sont connectées au terminal de configuration (140) par le biais d'un réseau IP (130).

9. Programme informatique pour la configuration d'un système de domotique pour installation dans un bâtiment, ledit système de domotique étant équipé d'une ou de plusieurs unités de commande centrales ou décentralisées (105) et de multiples modules E/S (101 - 104) de types précédemment connus, ledit programme informatique étant doté de moyens logiciels conçus pour amener les étapes suivantes à être réalisées par le terminal de configuration (140) connecté à la ou aux unités de commande centrales ou décentralisées (101-104) :
- la réception d'une sélection (301) de dispositifs E/S souhaités (111-114) depuis un ensemble prédéterminé de dispositifs E/S disponibles ; et
- la génération virtuelle (311) de modules E/S (101 - 104) correspondant aux dispositifs E/S souhaités (111-114), dans lequel la réception d'une sélection des dispositifs E/S souhaités est accomplie au moyen d'une interface utilisateur graphique (150) comprenant une interface, dans laquelle un plan de sol schématique du bâtiment peut être dessiné et dans laquelle les dispositifs E/S souhaités peuvent être dessinés par le biais de représentations schématiques de leur emplacement approximativement exact sur le plan de sol.

10. Programme informatique selon la revendication 9, dans lequel la réception de la sélection des dispositifs E/S souhaités est accomplie via une interface utilisateur graphique (150) et comprend la réception d'une combinaison fonctionnelle sélectionnée par l'utilisateur.

11. Programme informatique selon la revendication 9-10, doté de moyens logiciels agencés pour amener les étapes suivantes à être réalisées par le terminal de configuration (140) :
- la réception d'une sélection (30) d'interactions souhaitées entre les entrées et les sorties des modules E/S (101-104) correspondant aux dispositifs E/S souhaités (111-114) ;
- la génération (312) d'un fichier de configuration pour le système de domotique, ledit fichier de configuration comprenant les interactions souhaitées.

12. Programme informatique selon l'une quelconque des revendications 9-11, doté de moyens logiciels conçus pour amener les étapes suivantes à être réalisées par le terminal de configuration (140) :
- l'attribution virtuelle des dispositifs E/S souhaités (111-114) aux modules E/S générés (101-104).

13. Programme informatique selon l'une quelconque des revendications 9-12, doté de moyens logiciels conçus pour amener les étapes suivantes à être réalisées par le terminal de configuration (140) :
- la requête d'une activation séquentielle (303) de chacun des modules E/S (101-104) ; et
- la détection et le stockage (313) d'une adresse logique de chacun des modules E/S activés de manière séquentielle (101-104).

14. Programme informatique selon l'une quelconque des revendications 9-13, doté de moyens logiciels conçus pour amener les étapes suivantes à être réalisées par le terminal de configuration (140) :
- le transfert (314) du fichier de configuration à la ou aux unités de commande centrales ou décentralisées (105).
